Europäisches Patentamt

(19) European Patent Office

Office européen des brevets

(11) Numéro de publication: **0 146 423**
**B1**

# (12) FASCICULE DE BREVET EUROPÉEN

(45) Date de publication du fascicule du brevet:
03.02.88

(21) Numéro de dépôt: **84402157.6**

(22) Date de dépôt: **26.10.84**

(51) Int. Cl.⁴: **G 01 V 1/40**, E 21 B 23/00

(54) **Dispositif de mesure pour profil sismique dans un puits de forage.**

(30) Priorité: **09.11.83 FR 8317788**

(43) Date de publication de la demande:
**26.06.85 Bulletin 85/26**

(45) Mention de la délivrance du brevet:
**03.02.88 Bulletin 88/5**

(84) Etats contractants désignés:
**DE GB NL**

(56) Documents cité:
**FR-A-1 169 871**
**FR-A-2 172 808**
**FR-A-2 530 345**
**US-A-3 626 364**
**US-A-4 056 004**
**US-A-4 325 259**

**V.H. PITT: "The Penguin dictionary of physics",
1977, pages 120, 247-248, Penguin Books, éd.: V.H.
Pitt, Harmondsworth, GB;**

(73) Titulaire: **SOCIETE NATIONALE ELF AQUITAINE
(PRODUCTION), Tour Aquitaine, F-92400
Courbevoie (FR)**

(72) Inventeur: **Staron, Philippe, 9 Rue François Barbin,
F-91540 Mennecy (FR)**
Inventeur: **Gros, Pierre, 9 Avenue Jules Massenet,
F-78530 Buc (FR)**

(74) Mandataire: **Levy, David, c/o S.A. Fedit- Loriot 38,
avenue Hoche, F-75008 Paris (FR)**

EP 0 146 423 B1

## Description

La présente invention concerne un dispositif de mesure pour profil sismique vertical dans un puits de forage.

Les mesures faites dans un puits de forage appartiennent généralement à deux grands types.

Le premier type de mesure est appelé ultrasonique. Une telle mesure est effectuée au moyen d'un outil qui est descendu dans le puits de forage, au bout d'un câble. L'outil comprend un ou plusieurs émetteurs et un ou plusieurs récepteurs, en plus des moyens nécessaires au déclenchement des émetteurs aux instants appropriés, et des moyens pour transmettre, à la surface du sol, les signaux reçus par les récepteurs, en vue de leur enregistrement et traitement.

La mesure ultrasonique fait appel à des émetteurs capables d'émettre des signaux acoustiques de haute fréquence, de quelques milliers de hertz à des dizaines de milliers de hertz, dans le fluide emplissant le puits. Les signaux acoustiques se propagent dans le fluide sous forme d'ondes de compression dont les grandeurs physiques associées sont essentiellement la pression et la vitesse de particules.

Il est à noter qu'au contact d'hétérogénéités autour de l'outil, et notamment au contact de la paroi du puits de forage, d'autres ondes peuvent être engendrées. Mais les mesures ultrasoniques sont habituellement menées pour que les ondes, autres que celles de compression, soient diminuées ou fortement diminuées de manière à ne pas induire d'erreurs dans le traitement des ondes de compression auxquelles on s'intéresse.

Dans la plupart des cas, les mesures ultrasoniques sont faites pendant le déplacement de l'outil, c'est-à-dire lorsque l'outil est en mouvement dans le puits. La vitesse relativement lente de l'outil dans le puits, quelques mètres par minute, ne provoque pas de bruit parasite sur les récepteurs.

Les récepteurs utilisés, dénommés aussi transducteurs, sont des hydrophones qui sont en réalité des capteurs sensibles à la pression vibratoire. Les ondes reçues par les capteurs reçoivent les ondes de compression définies précédemment et, à la rigueur les ondes parasites issues des ondes de compression et engendrées par les hétérogénéités. La durée de chaque signal utile reçu sur le capteur, après chaque émission, est de l'ordre de quelques millisecondes, compte tenu de la fréquence des signaux émis.

Il est très important de noter que la mesure d'une onde de compression reçue sur le capteur, qui est une mesure de pression vibratoire, ne permet d'obtenir qu'une grandeur scalaire, c'est-à-dire sans orientation dans l'espace.

Il existe de nombreux outils pour la mesure ultrasonique, qui permettent de s'affranchir des ondes se propageant dans la masse même de l'outil, et de réaliser des trajets acoustiques possédant une symétrie cylindrique autour de l'axe du puits.

Le deuxième type de mesure concerne un profil sismique vertical, un profil sismique oblique ou encore un profil sismique de puits, ce deuxième type de mesure étant complètement différent du premier type rappelé précédemment pour mémoire.

En effet, pour la prospection du pétrole par exemple, il faut déterminer la nature et les caractéristiques des couches souterraines entourant le puits de forage. Pour cela, on engendre, à la surface du sol et non dans le puits de forage, une énergie sismique approprié (chute de poids) ou encore d'un vibrateur en contact avec la surface du sol. Cette énergie sismique crée des ondes qui se propagent dans des géophones et non plus sur des capteurs. Les géophones sont, par construction, des "vélocimètres" sensibles à la vitesse vibratoire, et disposés soit sur la surface du sol et alors ils reçoivent les ondes réfléchies et/ou réfractées par les différentes couches souterraines, soit dans le puits de forage mais alors ils doivent être impérativement en contact direct avec la paroi du puits de forage, contrairement à la mesure ultrasonique où les capteurs doivent être dans le fluide emplissant ledit puits de forage.

Dans tous les cas, les géophones ou vélocimètres sont sensibles à la vitesse vibratoire et doivent permettre la détermination de tous les types d'ondes sismiques engendrées par l'énergie émise en surface. En effet, le couplage mécanique direct entre les moyens d'émission et la surface du sol, donne naissance à tous les types d'ondes puisque l'énergie sismique émise rencontre forcément des hétérogénéités dans le sous-sol exploré. Dès lors, il n'est plus possible de se contenter de recevoir sur le ou les géophones une onde particulière parmi les autres, ni de s'accommoder d'une grandeur scalaire. Au contraire, il est nécessaire que les géophones reçoivent toutes les ondes, de compression ou transverses, et dans toutes les directions où elles se propagent, de manière à pouvoir, au traitement, distinguer toutes les directions possibles des vitesses vibratoires.

Etant donné les moyens d'émission utilisés et le but à atteindre, on émet des fréquences comprises entre quelques hertz et quelques centaines de hertz, de 5 à 500 Hz par exemple, la durée du signal utile étant de quelques secondes.

Enfin, par opposition à la mesure ultrasonique, pendant la remontée de l'outil, il faut noter que dans le deuxième type de mesure auquel on se réfère, les mesures sont effectuées, le ou les géophones immobiles par rapport à la paroi et plaquées contre elle pour assurer un couplage satisfaisant.

Le traitement ultérieur des signaux reçus sur les géophones permet d'obtenir des renseignements utiles sur les couches souterraines traversées par les ondes depuis la surface du sol jusqu'aux géophones.

Diverses techniques peuvent être mises en oeuvre. On peut disposer des géophones répartis régulièrement ou non, le long du puits de forage et traiter les informations sur les différents géophones. On peut également utiliser un outil comprenant un géophone et qu'on arrête, à chaque niveau approprié du puits de forage, pendant chaque mesure.

Dans le deuxième type de mesure, la grande difficulté provient de ce qu'on n'a pas réussi jusqu'à maintenant à obtenir un couplage satisfaisant du géophone sur la paroi du puits de forage.

Une tentative pour surmonter la difficulté a été faite et elle est décrite dans le brevet français No. 1 169 871. Le dispositif de l'art antérieur comprend un outil comportant un élément cylindrique qui sert à maintenir l'ensemble d'un géophone à la hauteur désirée dans le puits de forage, et qui empêche l'ensemble du géophone de tourner par rapport à l'outil grâce à une liaison par clavette. L'ensemble des géophones comprend deux lames à ressort en arc, disposées symétriquement de part et d'autre de l'outil qui est centré dans le puits de forage, et reliées l'une à l'autre par des pivots montés sur un élément intermédiaire relié au corps de l'outil. Une des lames à ressort est en appui sur la paroi du puits de forage tandis que l'autre porte, sensiblement au sommet de sa flèche, un patin, monté à pivot au milieu du ressort, ledit patin étant en contact par la face externe sur la paroi opposée à celle sur laquelle appuie le premier ressort. Un géophone est ensuite fixé sur la face interne du patin et il est relié par un câble conducteur vers l'équipement d'amplification situé à l'intérieur du corps de l'outil.

Un tel outil constitue une amélioration importante par rapport à la technique des géophones disposés sur la surface du sol ou répartis le long de la paroi du puits de forage. Mais il ne résout pas entièrement le problème du couplage direct à la paroi du puits de forage.

En effet, il n'y a pas contact direct du géophone sur la paroi du puits de forage puisqu'il est monté sur la face interne du patin. Bien que le patin soit parfaitement rigide et que la tension des ressorts ne lui permette pas de glisser le long de la paroi du puits de forage au cours de la mesure, il n'en demeure pas moins que les ondes parasites se propageant dans le corps de l'outil et créées par l'énergie émise, se propageant également dans les lames à ressort et le patin, sont reçues par le géophone.

Ceci provient de ce que l'outil, le patin et à un degré moindre les ressorts à lames sont rigides.

Un autre inconvénient est que pour une mesure donnée, le géophone est orienté dans une seule direction et ne peut donc détecter qu'un type d'onde.

Un autre inconvénient, le plus grave sans doute, est que le ressort à lame supportant le géophone ne présente qu'un degré de liberté, déterminé dans le sens de la flèche du ressort. La structure du ressort et les tensions d'application développées ne lui permettent pas d'être souple dans toutes les directions. De ce fait, il n'y a pas un découplage effectif entre la masse de l'outil et la masse du géophone et du patin associé, laquelle masse de l'outil, très importante par rapport à celle de l'ensemble géophone, introduit un effet parasite, lequel est d'autant plus important que la liaison du corps de l'outil avec ledit ensemble géophone est rigide.

Il faut également noter que, du fait de la liaison rigide entre la masse de l'outil et le géophone, ce dernier dont la masse est faible par rapport à celle de l'outil, ne peut vibrer utilement à la réception des hautes fréquences du spectre émis; ainsi, ces hautes fréquences se trouvent être éliminées et tout se passe donc comme si le corps de l'outil et les souplesses relatives des parois du puits de forage constituaient un filtre pour ces hautes fréquences.

La présente invention, qui se rapporte au deuxième type de mesure, permet d'apporter une solution satisfaisante au problème posé et de remédier aux inconvénients rappelés ci-dessus.

La présente invention a pour objet un dispositif de mesure pour profil sismique dans un puits de forage, du type comprenant des moyens d'émission disposés à la surface du sol et capables de délivrer des signaux d'émission dont la fréquence est comprise dans le spectre allant de 5 et 500 Hz, un corps d'outil disposé dans le puits de forage et relié aux moyens d'émission par un câble conducteur, au moins un géophone monté sur des organes élastiques qui sont reliés audit corps d'outil, ledit géophone détectant des ondes acoustiques générées par lesdits signaux d'émission après propagation dans des couches souterraines qui présentent une élasticité propre au niveau du géophone, des moyens d'enregistrement et de traitement des signaux électriques délivrés par ledit géophone en réponse aux ondes acoustiques reçues, la liaison entre ledit géophone et les moyens d'enregistrement et de traitement qui sont disposés à la surface du sol étant réalisée à travers ledit câble, et qui est caractérisé en ce que les organes élastiques sont constitués par des moyens souples dans au moins deux directions et interposés entre le géophone et des moyens d'application reliés au corps d'outil et destinés à appliquer ledit géophone contre la paroi du puits de forage pendant chaque détection desdites ondes, en ce que l'élasticité des moyen souples est au moins égale à l'élasticité la plus forte de la couche souterraine traversée par le puits de forage, et en ce que la fréquence de résonance de la masse du géophone avec les moyens souples soit au plus égale à la fréquence de résonance de ladite masse du géophone avec ladite élasticité la plus forte.

La liaison du géophone avec le corps de l'outil par des moyens souples dans deux directions permet de découpler presque totalement la masse du corps de l'outil de celle du géophone et, en conséquence, d'éliminer la quasi-totalité des effets parasites introduits par la masse du corps de l'outil dans les mesures. De plus, grâce à une telle liaison élastique, le géophone est capable de vibrer dans la direction de la vitesse vibratoire de l'onde qu'il reçoit.

Selon une autre caractéristique, le dispositif comprend trois géophones orthogonaux de manière à détecter aussi bien les vitesses vibratoires se propageant dans les trois directions de l'espace.

Selon une autre caractéristique de la présente invention, le corps de l'outil est en appui sur une paroi du puits de forage, opposée à celle sur laquelle est appliqué le géophone, et comprend un bras articulé d'immobilisation, en appui également sur la paroi recevant le géophone.

D'autres avantages et caractéristiques ressortiront mieux à la lecture de la description d'un mode préféré de l'invention, donné à titre indicatif mais non limitatif, ainsi que des dessins annexés sur lesquels :

la figure 1 est une représentation schématique du dispositif selon la présente invention ;

la figure 2 est une représentation partielle et schématique du système à ressorts ;

la figure 3 est une vue en élévation du système à ressorts de la figure 2 ;

la figure 4 est une représentation partielle et schématique d'un système élastique constitué par un bloc d'élastomère.

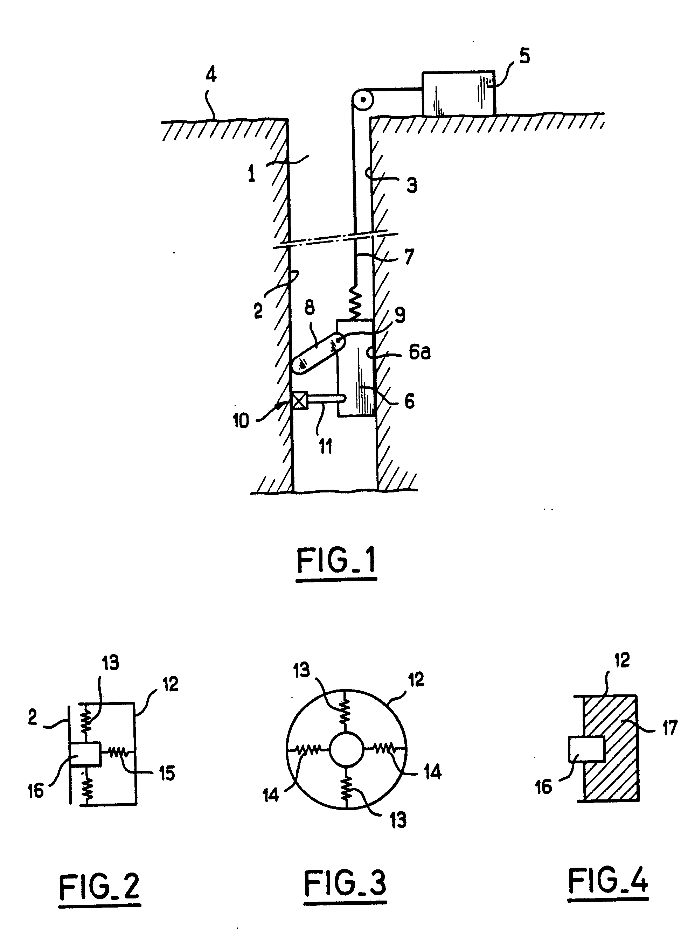

Le dispositif de mesure représenté sur la figure 1 est destiné à être descendu dans un puits de forage 1 délimité par ses parois 2 et 3 et la surface du sol 4. Le puits de forage 1 traverse des couches souterraines qui ne sont pas matérialisées sur les dessins et dont on veut connaître certaines de leurs caractéristiques.

A la surface du sol 4, représentés schématiquement par un bloc 5, sont disposés des moyens d'émission d'une énergie sismique et des moyens de commande et de déplacement d'un corps d'outil 6 dans le puits de forage 1. Le corps 6 est suspendu, dans le puits de forage 1, à un câble 7.

A la partie supérieure, par exemple, du corps 6, est monté un bras d'appui 8 qui est articulé sur un axe 9 porté par le corps 6.

Un ensemble géophone 10 est monté à une extrémité d'un bras rigide 11 et dont l'autre extrémité est fixée au corps d'outil 6. La liaison entre le bras 11 et le corps d'outil est réalisée de façon que l'ensemble géophone 10 puisse être plaqué contre la paroi 2 lors d'une mesure des vitesses vibratoires à détecter et éloigné de ladite paroi 2 lorsqu'on déplace le corps d'outil 6 pour amener ce dernier dans une autre position dans le puits 1.

L'ensemble géophone 10, dans un premier mode de réalisation (figures 2 et 3) est constitué par un boîtier 12 dans lequel sont montés au moins trois ressorts 13 à 15 qui sont reliés à un géophone 16 proprement dit, de manière à permettre à ce dernier de vibrer dans toutes les directions de propagation des vitesses vibratoires des ondes créées par les moyens d'émission 5. Dans l'exemple représenté sur la figure 2, le géophone 16 est disposé au centre du boîtier 12 et il est poussé contre la paroi 2 par le ressort 15 tandis que les ressorts 13 et 14 permettent au géophone 12 de vibrer dans les directions orthogonales à celles du ressort 15.

Dans un deuxième mode de réalisation représenté sur la figure 4, les ressorts 13 à 15 sont remplacés par un bloc élastomère 17 disposé dans le boîtier 12. Le géophone 12 est alors logé en partie dans le bloc élastomère 17 de manière à avoir une face libre susceptible d'être appliquée contre la paroi 2.

Par ailleurs, l'immobilisation du corps d'outil 6 contre les parois 2 et 3 du puits 1 permet de relâcher le câble 7 et donc de découpler également le corps d'outil 6 par rapport aux moyens de mise en place et d'émission 5 de la surface du sol.

Lorsque l'ensemble des moyens de mesure est en place dans le puits de forage, on excite les moyens d'émission 5 de surface qui émettent dans le sol et donc autour du puits de forage un signal dont la fréquence est comprise entre 5 et 500 Hz. Ce signal électrique donne naissance à des ondes qui se propagent dans les couches de terrain autour du puits de forage 1. Chaque type d'onde créée et arrivant sur l'ensemble géophone 10 est détectée par ce dernier sous forme d'une vitesse vibratoire. Les vibrations du ou des géophones 16, dans chaque direction sont transmises au sol par le câble, enregistrées puis traitées par les moyens adéquats qui ne seront pas décrits dans le détail.

Pour que chacun des géophones puisse vibrer convenablement dans la direction de la vitesse vibratoire détectée, il faut qu'il soit découplé mécaniquement du corps d'outil 6. Or l'élasticité propre s la plus forte de la paroi 2 introduit une liaison élastique sur le ou les géophones 16. Comme l'élasticité S des moyens élastiques 13 à 15 ou 17 agit sur ces derniers, on a donc un système élastique en équilibre constitué par le corps de l'outil et les bras annexes 8 et 11 de masse totale M , par l'ensemble géophone 16 de masse m, des moyens élastiques 13, 15 ou 17 interposés entre le corps d'outil 6 et l'ensemble géophone, et par l'élasticité s des roches. Pour obtenir un bon découplage, il est alors nécessaire de déterminer une élasticité S qui doit être d'autant plus grande que la masse M est grande par rapport à la masse m. Les calculs montrent que lorsque $S = s$, la vitesse vibratoire de l'ensemble géophone est la moitié de celle des roches. Dans ce cas, il est nécessaire que la fréquence de résonance de la masse m avec l'élasticité S soit égale à celle de la masse m avec l'élasticité s.

En admettant une fréquence de résonance F égale à 100 Hz, on calcule la déflexion sous charge des moyens élastiques 13 à 15 à partir de la formule $\rho = \frac{g}{F^2 4\pi^2}$ qui est très peu defférente de $\frac{1}{4F^2}$. Ainsi, pour $F = 100$ Hz, on obtient $\rho = \frac{1}{4 \cdot 10^4} = 0{,}025$ mm.

Des moyens élastiques présentant une telle déflexion sont facilement réalisables soit en acier, soit en une matière élastique telle que le néoprène.

Bien évidemment, on peut utiliser d'autres rapports entre S et s et d'autres fréquences de résonance dès lors que lesdites fréquences sont choisies dans le spectre de fréquences émis par les moyens d'émission, c'est-à-dire en fait entre 5 et 500 Hz.

Pour que la vitesse du géophone soit la plus voisine possible de celle de la roche et par exemple égale aux 9/10 de celle-ci, on peut prendre S = 9 s. Avec une masse m égale à 0,1 kg, il faut utiliser des moyens élastiques ayant une flexibilité égale à 0,225 mm/Newton et ce, pour S = 9 s.

Bien entendu, l'invention n'est nullement limitée aux modes de réalisation de l'exemple décrit et représenté, elle est susceptible de nombreuses variantes accessibles à l'homme de l'art, suivant les applications envisagées et sans s'écarter pour cela du cadre de l'invention.

**Revendications**

1. Dispositif de mesure pour profil sismique dans un puits de forage (1), du type comprenant des moyens d'émission disposés à la surface su sol et capables de délivrer des signaux d'émission dont la fréquence est comprise dans le spectre allant de 5 et 500 Hz, un corps d'outil (6) disposé dans le puits de forage et relié aux moyens d'émission par un câble conducteur (7), au moins un géophone (10) monté sur des organes élastiques qui sont reliés audit corps d'outil, ledit géophone détectant des ondes acoustiques générées par lesdits signaux d'émission après propagation dans des couches souterraines qui présentent une élasticité propre au niveau du géophone, des moyens d'enregistrement et de traitement des signaux électriques délivrés par ledit géophone en réponse aux ondes acoustiques reçues, la liaison entre ledit géophone (10) et les moyens d'enregistrement et de traitement qui sont disposés à la surface du sol étant réalisée à travers ledit câble (7), caractérisé en ce que les organes élastiques sont constitués par des moyens souples dans au moins deux directions et interposés entre le géophone (10) et des moyens d'application (11) reliés au corps d'outil et destinés à appliquer ledit géophone contre la paroi du puits de forage pendant chaque détection desdites ondes, en ce que l'élasticité (S) des moyens souples est au moins égale à l'élasticité s la plus forte de la couche souterraine traversée par le puits de forage (1), et en ce que la fréquence de résonance de la masse du géophone (m) avec les moyens souples (S) est au plus égale à la fréquence de résonance de ladite masse de géophone (m) avec ladite élasticité la plus forte (s).

2. Dispositif selon la revendication 1, caractérisé en ce que les moyens souples sont constitués par un ressort souple dans les trois directions.

3. Dispositif selon la revendication 1, caractérisé en ce qu'il comprend trois géophones (16) montés orthogonalement les uns par rapport aux autres de manière à permettre la détection des ondes se propageant dans les directions des géophones.

4. Dispositif selon la revendication 1, caractérisé en ce que le corps de l'outil (6) est excentré par rapport à l'axe vertical du puits de forage, et comprend un bras rétractable (8) dont une extrémité est articulée sur ledit corps d'outil tandis que l'autre extrémité libre est en appui sur la paroi (2) du puits de forage sur laquelle sont en contact le ou les géophones, ledit corps d'outil étant plaqué, par une de ses faces, contre l'autre paroi (3) du puits de forage.

5. Dispositif selon la revendication 1, caractérisé en ce que les fréquences de résonance sont comprises dans les linites du spectre de fréquence émis.

6. Dispositif selon la revendication 1, caractérisé en ce que les moyens souples sont constitués par un boîtier (12) relié au corps de l'outil par un bras rigide (11) et dans lequel sont montés trois ressorts (13-15) disposés orthogonalement les uns par rapport aux autres.

7. Dispositif selon la revendication 1, caractérisé en ce que les moyens souples sont constitués par un boîtier (12) relié au corps de l'outil par un bras rigide (11) et dans lequel est disposé un bloc d'élastomère (17) dans lequel est logé en partie le géophone.

**Patentansprüche**

1. Vorrichtung zum Messen eines seismischen Profils in einem Bohrloch, mit einer auf der Erdoberfläche befindlichen Sendeeinrichtung zur Abgabe von Sendesignalen innerhalb eines von 5 bis 500 Hz reichenden Frequenzspektrums, einem mit der Sendeeinrichtung über leitfähiges Kabel (7) verbundenen Werkzeugkörper (6) innerhalb des Bohrlochs, wenigstens einem an elastischen mit dem Werkzeugkörper verbundenen Organen befestigtes Geophon, das die von den Sendesignalen erzeugten akustischen Wellen nach Ausbreitung in den unterirdischen Schichten mit einer dem Niveau des Geophons angemessenen Elastizität erfaßt und einer Aufzeichnungs- und Verarbeitungseinrichtung für die von dem Geophon in Abhängigkeit von den akustischen Wellen abgegebenen elektrischen Signale, wobei die Verbindung zwischen dem Geophon (10) und der auf der Erdoberfläche befindlichen Aufzeichnungs- und Verarbeitungseinrichtung uber das besagte Kabel (7) hergestellt ist, Dadurch gekennzeichnet, daß die elastischen Organe von einer in mindestens zwei Richtungen biegsamen elastischen Einrichtung gebildet sind, die zwischen dem Geophon (10) und einer Applikationseinrichtung (11) angeordnet ist, die mit dem Werkzeugkörper verbunden und für eine Applikation des Geophans an der Bohrlochwandung während des Erfassens der Wellen bestimmt ist, daß die Elastizität (S) der elastischen Einrichtung mindestens gleich der größten Elastizität (s) der das Bohrloch (1) querenden unterirdischen Schicht ist, und daß die Resonanzfrequenz der Masse des Geophons (m) mit der elastischen Einrichtung (S) höchstens gleich der Resonanzfrequenz dieser Geophonmasse (m) mit der großten Elastizität (S) ist.

2. Vorrichtung nach Anspruch 1, dadurch gekennzeichnet, daß die elastische Einrichtung von einer in drei Richtungen biegsamen Feder gebildet ist.

3. Vorrichtung nach Anspruch 1, dadurch gekennzeichnet, daß drei Geophone (10) vorgesehen sind, die senkrecht zueinander derart angeordnet sind, daß die sich in den Richtungen der Geophone ausbreitenden Wellen erfaßt werden können.

4. Vorrichtung nach Anspruch 1, dadurch gekennzeichnet, daß der Werkzeugkörper (6) exzentrisch zur Vertikalachse des Bohrlochs angeordnet ist und mindestens einen einschiebbaren Arm (8) aufweist, von dem das eine Ende an dem Werkzeugkörper angelenkt ist, während das freie Ende an der Bohrlochwandung (2) abgestützt ist, mit der das oder die Geophone in Kontakt stehen, wobei der Werkzeugkörper mit einer seiner Seiten an einer anderen Wandung (3) des Bohrlochs anliegt.

5. Vorrichtung nach Anspruch 1, dadurch gekennzeichnet, daß die Resonanzfrequenzen innerhalb der Grenzen des Frequenzspektrums der ausgesandten Signale liegen.

6. Vorrichtung nach Anspruch 1, dadurch gekennzeichnet, daß die elastische Einrichtung von einem mit dem Werkzeugkörper mittels eines starren Armes (11) verbundenen Kasten (12) gebildet ist, in dem drei Federn (13 bis 15) senkrecht zueinander angeordnet sind.

7. Vorrichtung nach Anspruch 1, dadurch gekennzeichnet, daß die elastische Einrichtung von einem mit dem Werkzeugkörper mittels eines starren Armes (11) verbundenen Kasten (12) gebildet ist, in dem ein elastomerer Block (17) angeordnet ist, in dem teilweise das Geophon untergebracht ist.

### Claims

1. Apparatus for measuring a seismic profile in a drilled well (1), of the type comprising emission means located on the surface of the ground and able to supply emission signals, whereof the frequency is in the spectrum ranging from 5-500 Hz, a tool body (6) disposed in the well and connected to the emission means by a conducting cable (7), at least one geophone (10) mounted on elastic members connected to the tool body, said geophone detecting the sound waves generated by said emission signals following propagation in the underground layers having an inherent elasticity level with the geophone, means for recording and processing the electric signals supplied by said geophone in response to the accoustic waves received, the connection between the geophone (10) and the recording and processing means located on the ground surface being connected via cable (7), characterised in that the elastic members are constituted by means which are flexible in at least two directions and located between geophone (10) and application means (11) connected to the tool body and serving to apply the geophone to the wall of the drilled well during each detection of the said waves, in that the elasticity (S) of the flexible means is at least equal to the greatest elasticity (s) of the underground layer traversed by the well (1) and in that the resonant frequency of the geophone mass (m) with the flexible means (S) is at the most equal to the resonant frequency of the geophone mass (m) with the greatest elasticity (s).

2. Apparatus according to claim 1, characterised in that the flexible means are constituted by a spring which is flexible in three directions.

3. Apparatus according to claim 1, characterised in that it comprises three geophones (16) mounted orthogonally with respect to one another, so as to permit the detection of waves propagating in the directions of the geophones.

4. Apparatus according to claim 1, characterised in that the body of tool (6) is offcentred with respect to the vertical axis of the well and comprises a retractable arm (8), whereof one end is articulated to the tool body, whilst the other free end bears on the wall (2) of the well with which the geophone or geophones are in contact, said tool body engaging by one of its faces against the other wall (3) of the well.

5. Apparatus according to claim 1, characterised in that the resonant frequencies are within the limits of the emitted frequency spectrum.

6. Apparatus according to claim 1, characterised in that the flexible means are constituted by a box (12) connected to the tool body by a rigid arm (11) and in which are mounted three springs (13-15) arranged orthogonally with respect to one another.

7. Apparatus according to claim 1, characterised in that the flexible means are constituted by a box (12) connected to the tool body by a rigid arm (11) and in which is placed an elastomer block (17) in which the geophone is partly located.

FIG_1

FIG_2

FIG_3

FIG_4